# EUROPEAN PATENT APPLICATION

(11) **EP 4 848 404 A1**
(43) Date of publication of application: **02.12.2026**
(21) Application number: 25864716.3
(22) Date of filing: 07.02.2025
(51) Int. Cl.: H01M 10/42, H01M 10/48, H01M 50/583, H02J 7/02, H02H 3/087

(54) **ENERGY STORAGE CONTAINER AND FUSE ADAPTATION METHOD**

(30) Priority: 11.09.2024 CN 202411273179
(71) Applicant: Eve Energy Co., Ltd., Huizhou, Guangdong 516006 (CN); Eve Power Co., Ltd., Jingmen, Hubei 448000 (CN)
(72) Inventor: LIU, Jianhua, Huizhou, Guangdong 516006 (CN); YI, Haohao, Huizhou, Guangdong 516006 (CN); SUN, Yuanbiao, Huizhou, Guangdong 516006 (CN); ZHAO, Zihui, Huizhou, Guangdong 516006 (CN); GUI, Ke, Huizhou, Guangdong 516006 (CN)
(74) Representative: Berggren Oy
(86) International application number: PCT/CN2025/076207
(87) International publication number: WO 2026/056208

(57) **Abstract**

The present application relates to an energy storage container and a fuse adaptation method. The energy storage container includes: a combiner unit; a plurality of high-voltage boxes connected in parallel to the combiner unit; a plurality of battery clusters, each of the plurality of battery clusters being electrically connected to one of the plurality of high-voltage boxes; and a processing unit electrically connected to the plurality of high-voltage boxes. Each high-voltage box includes a first short-circuit protection unit and a first current detection unit electrically connected to the first short-circuit protection unit, and the first short-circuit protection unit is electrically connected to the processing unit.

## Description

This application claims priority to and the benefit of Chinese Patent Application No. 2024112731798, filed with the China National Intellectual Property Administration on September 11, 2024, the disclosure of which is incorporated herein by reference in its entirety.

### TECHNICAL FIELD

The present application relates to the field of battery technologies, and in particular, to an energy storage container and a fuse adaptation method.

### BACKGROUND

With the improvement of energy storage systems and the demands of economic development, power energy storage systems based on lithium battery chemistries have been developing rapidly. Due to the large amount of energy stored in lithium batteries, if the selection of components is not carried out with a global consideration of the short-circuit withstand current range, the system may explode or catch fire during a short-circuit event, resulting in direct economic losses.

However, because the short-circuit withstand current is not calculated and verified in advance during the system scheme design process, the trial-and-error cost is high and the project schedule cannot meet the required product development cycle. Moreover, if the short-circuit withstand current rating of the selected fuse is too low, then under extreme short-circuit conditions in the system, the actual short-circuit current may exceed the short-circuit withstand current of the fuse, causing the fuse to explode and the energy storage system to catch fire, thereby posing a safety risk. Conversely, if the short-circuit withstand current rating of the selected fuse is too high, the product size becomes large and requires more installation space; when the available space is limited, this may lead to insufficient electrical clearance and creepage distance, which likewise presents a safety risk.

### SUMMARY

The present application provides an energy storage container and a fuse adaptation method, which can verify the selection of the fuse in advance from the overall perspective of the energy storage container, thereby improving the reliability and rationality of short-circuit protection, reducing safety risks caused by inadequate short-circuit protection, and at the same time improving the accuracy of fuse adaptation. As a result, the volume of components related to short-circuit protection can be reduced, which not only enhances electrical safety but also lowers costs.

According to an aspect of the present application, an energy storage container is provided, including: a combiner unit; a plurality of high-voltage boxes connected in parallel to the combiner unit; a plurality of battery clusters, each of the plurality of battery clusters being electrically connected to one of the plurality of high-voltage boxes; and a processing unit electrically connected to the plurality of high-voltage boxes. Each of the high-voltage boxes includes a first short-circuit protection unit and a first current detection unit electrically connected to the first short-circuit protection unit. The first short-circuit protection unit is electrically connected to the processing unit. The first current detection unit is configured to detect a short-circuit withstand current of a branch where one of the plurality of high-voltage boxes is located when a short circuit occurs in the container. The processing unit is configured to select, based on the short-circuit withstand current, a fuse in the first short-circuit protection unit that is adapted to the energy storage container.

According to another aspect of the present application, a fuse adaptation method is provided, the fuse adaptation method is applied to the energy storage container, and the fuse adaptation method includes: obtaining a short-circuit withstand current of a cell; calculating, based on the short-circuit withstand current and a short-circuit position inside the energy storage container, a maximum short-circuit withstand current of the energy storage container; and selecting, based on the maximum short-circuit withstand current of the energy storage container, a fuse adapted to the energy storage container from the first short-circuit protection unit of one of the plurality of high-voltage boxes.

### BENEFICIAL EFFECTS

By detecting, via the processing unit, the short-circuit withstand current of the branch where the high-voltage box is located when a short circuit occurs in the energy storage container and selecting a fuse adapted to the energy storage container from the first short-circuit protection unit based on the short-circuit withstand current, the selection of the fuse can be verified in advance from the overall perspective of the energy storage container according to various aspects of the present application. This improves the reliability and rationality of short-circuit protection, reduces safety risks caused by inadequate short-circuit protection, and at the same time enhances the accuracy of fuse adaptation, so that the volume of components related to short-circuit protection can be reduced, thereby improving electrical safety while also reducing costs.

### BRIEF DESCRIPTION OF THE DRAWINGS

FIG. 1 illustrates a block diagram of a first type of energy storage container according to an embodiment of the present application.
FIG. 2 illustrates a block diagram of a second type of energy storage container according to an embodiment of the present application.
FIG. 3 illustrates a schematic diagram of a centralized energy storage container according to an embodiment of the present application.
FIG. 4 illustrates a schematic diagram of a distributed energy storage container according to an embodiment of the present application.
FIG. 5 illustrates a schematic diagram of a short circuit occurring in a single combiner cabinet according to an embodiment of the present application.
FIG. 6 illustrates a schematic diagram of a short circuit occurring in one of a plurality of combiner cabinets according to an embodiment of the present application.
FIG. 7 illustrates a schematic diagram of a short circuit occurring in one battery cluster among the plurality of combiner cabinets according to an embodiment of the present application.
FIG. 8 illustrates a flowchart of a fuse adaptation method according to an embodiment of the present application.

### DETAILED DESCRIPTION

In order to make the objectives, technical solutions, and effects of the present application clearer, the present application will be described in further detail below with reference to the accompanying drawings and exemplary embodiments. It should be understood that the specific embodiments described herein are merely for explaining the present application and are not intended to limit the present application.

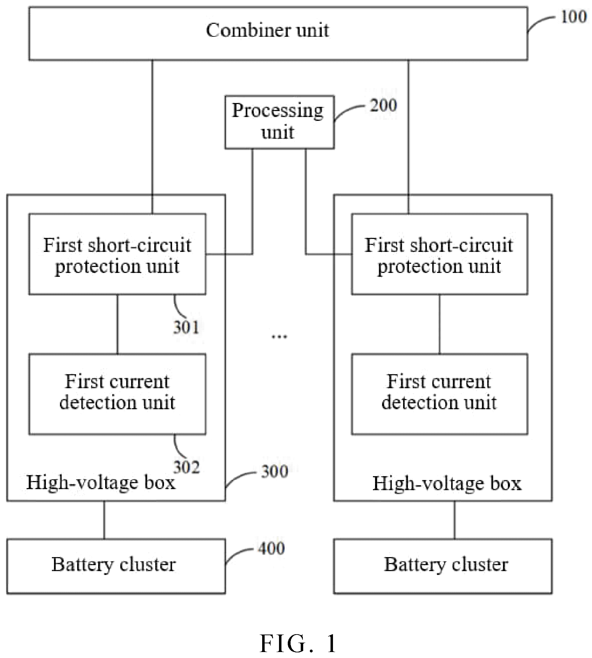

FIG. 1 illustrates a block diagram of a first type of energy storage container according to an embodiment of the present application. As shown in FIG. 1, the energy storage container of the present application includes a combiner unit 100, a processing unit 200, a plurality of high-voltage boxes 300, and a plurality of battery clusters 400. Each battery cluster 400 is electrically connected to one high-voltage box 300, and the plurality of high-voltage boxes 300 are connected in parallel to the combiner unit 100. The processing unit 200 is electrically connected to the plurality of high-voltage boxes 300. Each high-voltage box 300 includes a first short-circuit protection unit 301 and a first current detection unit 302 electrically connected to the first short-circuit protection unit 301. The first short-circuit protection unit 301 is electrically connected to the processing unit 200. The first current detection unit 302 is configured to detect a short-circuit withstand current of a branch where the high-voltage box 300 is located when a short circuit occurs in the container. The processing unit 200 is configured to select, based on the short-circuit withstand current, a fuse in the first short-circuit protection unit 301 that is adapted to the energy storage container.

In an embodiment, the combiner unit 100 is electrically connected to a power conversion system (PCS). The power conversion system is configured to perform DC/AC conversion on direct current from each battery cluster 400 to discharge power to an external load, or to perform AC/DC conversion on external commercial power to charge each battery cluster 400. The power conversion system can communicate with a battery management system (BMS) via a controller area network (CAN) bus. The configuration of the power conversion system is not limited by the present application.

The combiner unit 100 may be provided with a single combiner cabinet or a plurality of combiner cabinets. The combiner cabinet may be provided with a busbar. When the combiner unit 100 is provided with a plurality of combiner cabinets, the plurality of combiner cabinets may be connected in parallel and are all electrically connected to the power conversion system.

The battery cluster 400 includes a plurality of battery packs, and each battery pack includes a plurality of cells. The plurality of cells of the battery pack are arranged in rows and columns, and the plurality of battery packs may be connected in series to form the battery cluster 400. The high-voltage boxes 300 and the battery clusters 400 are both provided in a number of n, where n is a positive integer. It can be understood that the number of battery clusters 400 and the number of cells may be set as required, and the present application is not limited thereto.

The first short-circuit protection unit of the high-voltage box 300 includes at least two different types of fuses. Due to the different types of the fuses, the maximum short-circuit withstand currents of the fuses are also different. The different types of fuses may all be electrically connected to the processing unit 200, so as to facilitate the processing unit 200 to automatically select, according to the circumstances, a fuse adapted to the energy storage container.

The first current detection unit 302 includes a current sensor, and the current sensor may be a Hall current sensor. Of course, the current sensor may also be of other types, and the present application is not limited thereto.

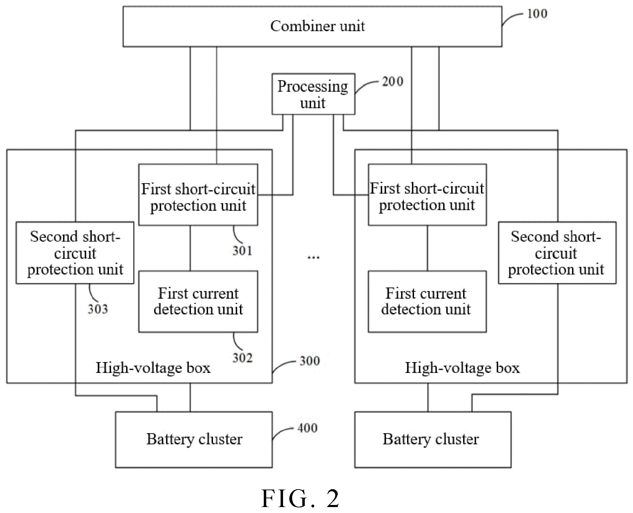

FIG. 2 illustrates a block diagram of a second type of energy storage container according to an embodiment of the present application. As shown in FIG. 2, the first short-circuit protection unit of the high-voltage box 300 further includes a first protection switch. A first end of the first protection switch is electrically connected to at least two different types of fuses, and a second end of the first protection switch is electrically connected to the combiner unit 100. The first protection switch can be used to connect a fuse of a target type.

The high-voltage box 300 may further include a second short-circuit protection unit 303, and the second short-circuit protection unit 303 is electrically connected to the battery cluster 400 corresponding to the high-voltage box 300 and to the combiner unit 100. The plurality of second short-circuit protection units 303 of the plurality of high-voltage boxes 300 are connected in parallel to the combiner unit 100. The second short-circuit protection unit 303 is connected in parallel with the first short-circuit protection unit 301.

In an embodiment, the second short-circuit protection unit of the high-voltage box 300 also includes at least two different types of fuses. Due to the different types of the fuses, the maximum short-circuit withstand currents of the fuses are also different. The different types of fuses may all be electrically connected to the processing unit 200, so as to facilitate the processing unit 200 to automatically select, according to the circumstances, a fuse adapted to the energy storage container.

The second short-circuit protection unit of the high-voltage box 300 further includes a second protection switch. A first end of the second protection switch is electrically connected to at least two different types of fuses of the second short-circuit protection unit, and a second end of the second protection switch is electrically connected to the combiner unit 100. The second protection switch can be used to connect a fuse of a target type.

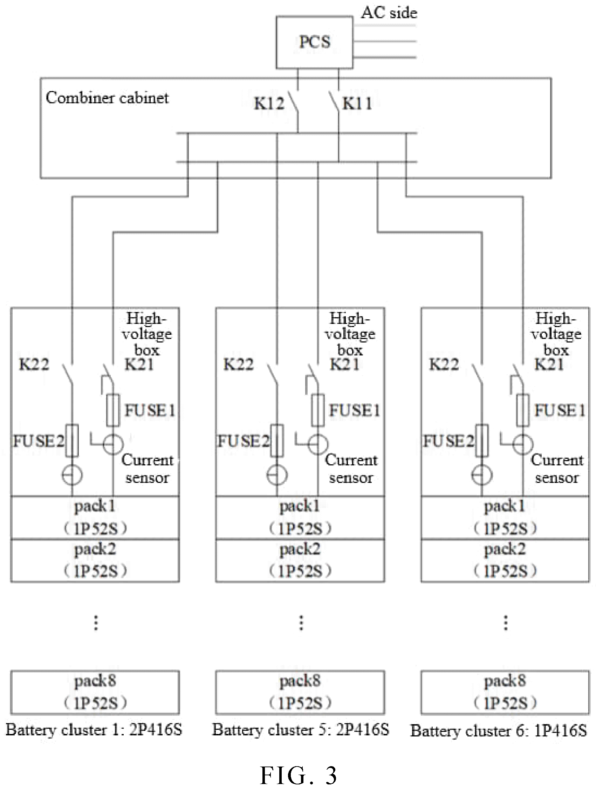

FIG. 3 illustrates a schematic diagram of a centralized energy storage container according to an embodiment of the present application. As shown in FIG. 3, the combiner unit 100 includes a combiner cabinet, and the combiner cabinet includes a first isolating switch K11 and a second isolating switch K12. A first end of the first isolating switch K11 is electrically connected to the power conversion system, and a second end of the first isolating switch K11 is electrically connected to the first short-circuit protection units of the plurality of high-voltage boxes 300. A first end of the second isolating switch K12 is electrically connected to the power conversion system, and a second end of the second isolating switch K12 is electrically connected to the second short-circuit protection units of the plurality of high-voltage boxes 300. Specifically, the second end of the first isolating switch K11 is electrically connected to the first protection switches K21 of the plurality of high-voltage boxes 300, and the second end of the second isolating switch K12 is electrically connected to the second protection switches K22 of the plurality of high-voltage boxes 300. The fuse of the first short-circuit protection unit is denoted by FUSE1, and the fuse of the second short-circuit protection unit is denoted by FUSE2.

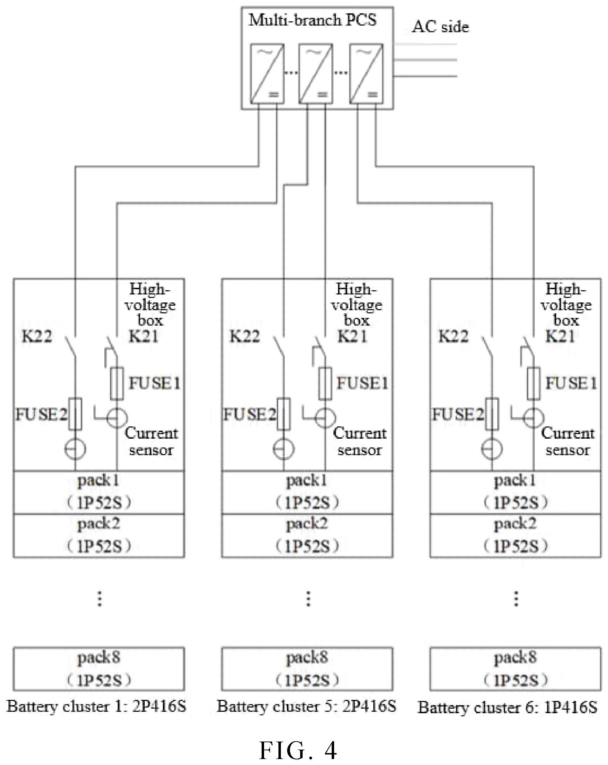

FIG. 4 illustrates a schematic diagram of a distributed energy storage container according to an embodiment of the present application. As shown in FIG. 4, the power conversion system (PCS) includes a plurality of branches, and each branch is connected to one high-voltage box 300. In other words, both the first short-circuit protection unit and the second short-circuit protection unit of the high-voltage box 300 are connected to one branch of the power conversion system.

In an embodiment, the plurality of first short-circuit protection units 301 are electrically connected to the first isolating switch, and the plurality of second short-circuit protection units 303 are electrically connected to the second isolating switch. When at least one battery cluster 400 is short-circuited, the processing unit 200 is configured to calculate the sum of short-circuit withstand currents of (n - x) battery clusters 400, and to select a fuse adapted to the energy storage container from the first short-circuit protection unit 301 based on the sum of the short-circuit withstand currents of the (n - x) battery clusters 400, where x is the number of battery clusters 400 that experience the short circuit.

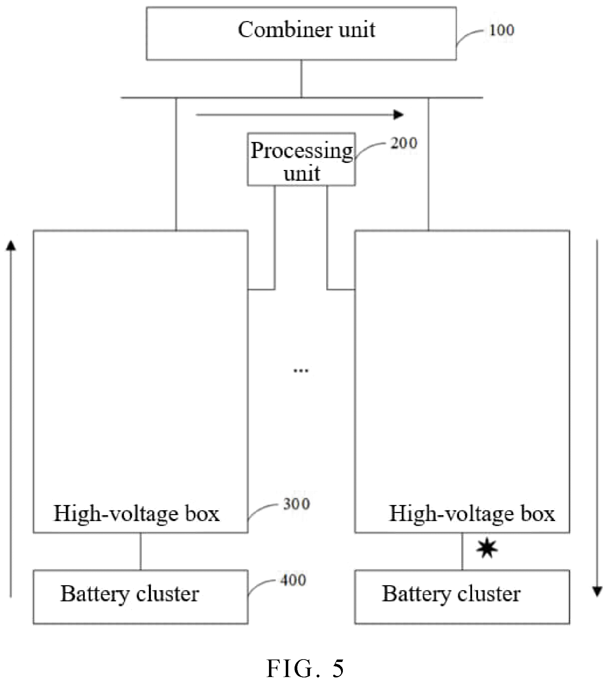

FIG. 5 illustrates a schematic diagram of a short circuit occurring in a single combiner cabinet according to an embodiment of the present application. As shown in FIG. 5, the short-circuit location is at one side of the battery cluster 400, and is indicated by an asterisk. Assuming that the number of battery clusters 400 connected to the combiner unit 100 is six, when one combiner cabinet is provided in the energy storage container and an internal short circuit occurs in the rightmost battery cluster 400, according to Kirchhoff's law, the short-circuit withstand current flows through a busbar in the combiner cabinet toward the short-circuit point of the branch where the faulty battery cluster 400 is located. At this time, the maximum short-circuit withstand current of the busbar in the combiner cabinet is equal to the sum of the short-circuit withstand currents of the branches where all other non-faulty battery clusters 400 are located, i.e., the sum of the short-circuit withstand currents of five clusters. Taking, as an example, that each branch where a battery cluster 400 is located has a short-circuit withstand current of 21 kA, the maximum short-circuit withstand current of the busbar in the combiner cabinet is 21 kA × 5, i.e. 105 kA.

In an embodiment, the combiner unit 100 includes at least two combiner cabinets. The at least two combiner cabinets are connected in parallel, and the plurality of high-voltage boxes 300 are electrically connected to one of the at least two combiner cabinets.

When a short circuit occurs in one combiner cabinet of the at least two combiner cabinets, the processing unit 200 is configured to calculate the sum of short-circuit withstand currents of n battery clusters 400, and to select a fuse adapted to the energy storage container from the first short-circuit protection unit 301 based on the sum of the short-circuit withstand currents of the n battery clusters 400.

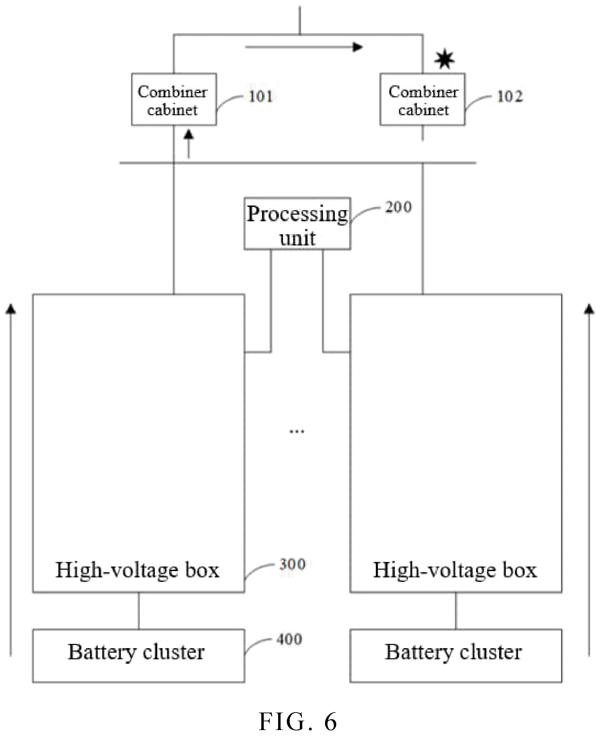

FIG. 6 illustrates a schematic diagram of a short circuit occurring in one of a plurality of combiner cabinets according to an embodiment of the present application. As shown in FIG. 6, the combiner unit 100 includes a combiner cabinet 101 and a combiner cabinet 102, and a short circuit occurs in the combiner cabinet 102. Since the two combiner cabinets are connected in parallel, according to Kirchhoff's law, the short-circuit withstand current flows through a main circuit of the combiner cabinet 101 toward the short-circuit point of the combiner cabinet 102. At this time, the maximum short-circuit withstand current of the busbar is 126 kA (calculated as the sum of the short-circuit withstand currents of six clusters, i.e. 21 kA × 6).

When at least one battery cluster 400 is short-circuited, the processing unit 200 is configured to calculate the sum of short-circuit withstand currents of (2n - x) battery clusters 400, and to select a fuse adapted to the energy storage container from the first short-circuit protection unit 301 based on the sum of short-circuit withstand currents of (2n - x) battery clusters 400, where x is the number of battery clusters 400 that experience the short circuit.

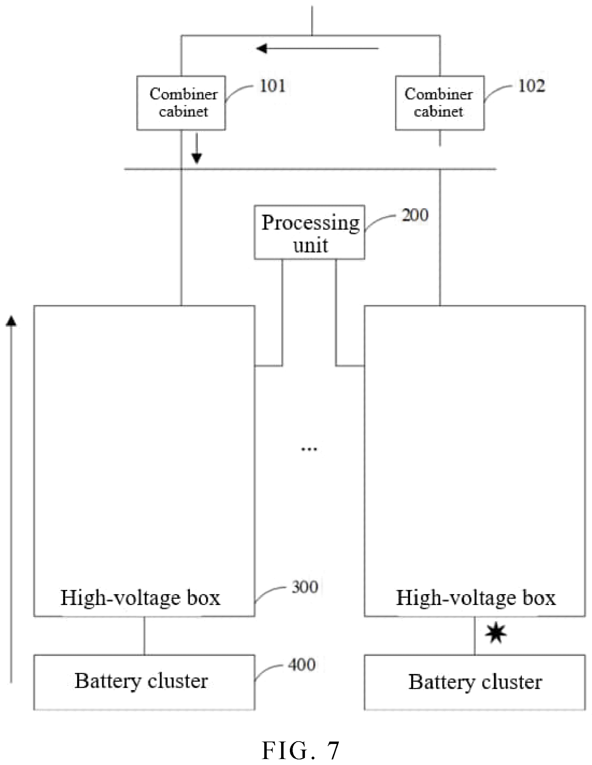

FIG. 7 illustrates a schematic diagram of a short circuit occurring in one battery cluster among a plurality of combiner cabinets according to an embodiment of the present application. As shown in FIG. 7, the combiner unit 100 includes a combiner cabinet 101 and a combiner cabinet 102, and an internal short circuit occurs in the rightmost battery cluster 400. Since the two combiner cabinets are connected in parallel, according to Kirchhoff's law, the short-circuit withstand current of the other combiner cabinet 102 flows through the combiner cabinet 101 toward the short-circuit point. The maximum short-circuit withstand current of the high-voltage box 300 is equal to the sum of the short-circuit withstand currents of six clusters plus the sum of the short-circuit withstand currents of five clusters, i.e. the sum of the short-circuit withstand currents of eleven clusters in total, namely 21 kA × 11 = 231 kA.

In an embodiment, the battery cluster 400 includes a plurality of cells. Before selecting, based on the short-circuit withstand current, a fuse adapted to the energy storage container from the first short-circuit protection unit 301, the processing unit 200 is further configured to: obtain a correction coefficient for the short-circuit withstand current of the cells; and determine the short-circuit withstand current based on the correction coefficient and the nominal withstand current of the cells.

Exemplarily, the model of the cells in the battery cluster 400 of the present application is LF628K. Taking this type of cell as an example, for a single cell, the short-circuit withstand current of the single cell may be expressed as: I1 = U1 / R1 = 3.2 V / 0.1 mΩ = 32 kA, where I1 denotes the short-circuit withstand current of the single cell, U1 denotes the rated voltage of the single cell, and R1 denotes the internal resistance of the single cell. The resistance value of the single cell does not need to be corrected.

For a battery pack formed by cells of this model, the short-circuit withstand current of the battery pack may be expressed as: Ip = Up / Rp = (3.2 × 52) V / (0.1 × 52) mΩ = 32 kA, where Ip denotes the short-circuit withstand current of a single battery pack, Up denotes the rated voltage of the single battery pack, and Rp denotes the internal resistance of the single battery pack. Since the measured data is less than 21 kA, the correction coefficient Kp is calculated as 32 kA / 21 kA, which is approximately 1.53.

For a battery cluster 400 formed by a plurality of battery packs, the short-circuit withstand current of the battery cluster 400 may be expressed as: Ic = Uc / Rc = (3.2 × 416) V / (0.1 × 416) mΩ = 32 kA, where Ic denotes the short-circuit withstand current of a single cluster, Uc denotes the rated voltage of the single cluster, and Rc denotes the internal resistance of the single cluster. The resistance correction coefficient at the cluster level is the same as that of the battery pack, i.e., approximately 1.53. Therefore, the short-circuit withstand current may be corrected to Ic = 32 kA / 1.53, which is approximately 21 kA.

The present application further provides an energy storage system including the above-mentioned energy storage container.

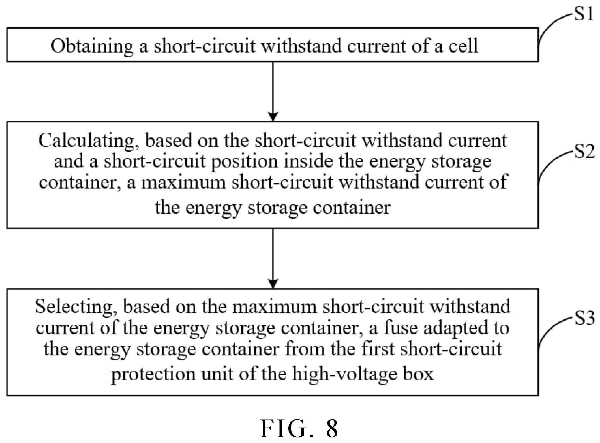

FIG. 8 illustrates a flowchart of a fuse adaptation method according to an embodiment of the present application. As shown in FIG. 8, the fuse adaptation method is applied to the energy storage container, and the fuse adaptation method includes steps as follows.

In step S1, a short-circuit withstand current of a cell is obtained.

In an embodiment, the short-circuit withstand current of the cell is determined based on the correction coefficient and the nominal withstand current of the cell. For example, the correction coefficient may be 1.53, and the nominal withstand current may be 32 kA. By dividing the nominal withstand current by the correction coefficient, a short-circuit withstand current of the cell of 21 kA may be obtained.

In step S2, a maximum short-circuit withstand current of the energy storage container is calculated based on the short-circuit withstand current and a short-circuit position inside the energy storage container.

In an embodiment, each combiner cabinet in the combiner unit is provided with a second current detection unit, configured to detect whether the combiner cabinet is short-circuited. The processing unit determines a position of a combiner cabinet or a battery cluster where a short circuit occurs based on current information detected by the first current detection unit and a current signal detected by the second current detection unit, and then calculates the maximum short-circuit withstand current of the energy storage container.

When at least one battery cluster 400 is short-circuited, the processing unit 200 is configured to calculate the sum of short-circuit withstand currents of (n - x) battery clusters 400, and to select a fuse adapted to the energy storage container from the first short-circuit protection unit 301 based on the sum of the short-circuit withstand currents of the (n - x) battery clusters 400, where x is the number of battery clusters 400 that experience the short circuit.

For an architecture with a plurality of combiner cabinets, when a short circuit occurs in one combiner cabinet of the at least two combiner cabinets, the processing unit 200 is configured to calculate the sum of short-circuit withstand currents of n battery clusters 400, and to select a fuse adapted to the energy storage container from the first short-circuit protection unit 301 based on the sum of the short-circuit withstand currents of the n battery clusters 400.

For an architecture with a plurality of combiner cabinets, when at least one battery cluster 400 is short-circuited, the processing unit 200 is configured to calculate the sum of short-circuit withstand currents of (2n - x) battery clusters 400, and to select a fuse adapted to the energy storage container from the first short-circuit protection unit 301 based on the sum of short-circuit withstand currents of (2n - x) battery clusters 400, where x is the number of battery clusters 400 that experience the short circuit.

In step S3, a fuse adapted to the energy storage container is selected from the first short-circuit protection unit of the high-voltage box based on the maximum short-circuit withstand current of the energy storage container.

In an embodiment, the first short-circuit protection unit is provided with a plurality of different types of fuses. For example, when the calculated maximum short-circuit withstand current of the energy storage container is 126 kA, a fuse having a maximum short-circuit withstand current of 126 kA may be selected from the first short-circuit protection unit by a first protection switch.

It should be noted that the second short-circuit protection unit may also be provided with a plurality of different types of fuses. The processing unit may alternatively select a fuse adapted to the energy storage container from the second short-circuit protection unit of the high-voltage box based on the maximum short-circuit withstand current of the energy storage container. The operating principle is the same as that of the first short-circuit protection unit and will not be described in detail herein.

In summary, by detecting, via the processing unit, the short-circuit withstand current of the branch where the high-voltage box is located when a short circuit occurs in the energy storage container and selecting a fuse adapted to the energy storage container from the first short-circuit protection unit based on the short-circuit withstand current, the selection of the fuse can be verified in advance from the overall perspective of the energy storage container according to the present application. This improves the reliability and rationality of short-circuit protection, reduces safety risks caused by inadequate short-circuit protection, and at the same time enhances the accuracy of fuse adaptation, so that the volume of components related to short-circuit protection can be reduced, thereby improving electrical safety while also reducing costs.

It can be understood that, for those of ordinary skill in the art, various equivalent substitutions or modifications may be made based on the technical solutions and inventive concept of the present application, and all such substitutions or modifications shall fall within the protection scope of the claims appended to the present application.

## Claims

1. An energy storage container, comprising:
a combiner unit;
a plurality of high-voltage boxes connected in parallel to the combiner unit;
a plurality of battery clusters, each of the plurality of battery clusters being electrically connected to one of the plurality of high-voltage boxes; and
a processing unit electrically connected to the plurality of high-voltage boxes;
wherein the plurality of high-voltage boxes comprise a plurality of first short-circuit protection units and a plurality of first current detection units electrically connected to the plurality of first short-circuit protection units, the first short-circuit protection unit is electrically connected to the processing unit, the first current detection unit is configured to detect a short-circuit withstand current of a branch where one of the plurality of high-voltage boxes is located when a short circuit occurs in the container, and the processing unit is configured to select, based on the short-circuit withstand current, a fuse adapted to the energy storage container from the first short-circuit protection unit.

2. The energy storage container according to claim 1, wherein the plurality of high-voltage boxes and the plurality of battery clusters are each provided in a number of n, where n is a positive integer; the first short-circuit protection unit of each of the plurality of high-voltage boxes comprises at least two different types of fuses having different maximum short-circuit withstand currents; the processing unit is configured to select, based on the short-circuit withstand current, a target one of the fuses adapted to the energy storage container from the first short-circuit protection unit.

3. The energy storage container according to claim 1, wherein the plurality of high-voltage boxes further comprise a plurality of second short-circuit protection units, the second short-circuit protection unit is electrically connected to one of the plurality of battery clusters corresponding to one of the plurality of high-voltage boxes and to the combiner unit, and the second short-circuit protection unit is connected in parallel with the first short-circuit protection unit.

4. The energy storage container according to claim 1, wherein the combiner unit comprises a combiner cabinet, the combiner cabinet comprises a first isolating switch, and a plurality of the first short-circuit protection units are electrically connected to the first isolating switch; when a short circuit occurs in at least one of the plurality of battery clusters, the processing unit is configured to calculate a sum of short-circuit withstand currents of (n - x) battery clusters, and to select, based on the sum of the short-circuit withstand currents of the (n - x) battery clusters, a fuse adapted to the energy storage container from the first short-circuit protection unit, where x denotes the number of short-circuited ones of the plurality of battery clusters.

5. The energy storage container according to claim 3, wherein the combiner cabinet comprises a second isolating switch, a plurality of the second short-circuit protection units are electrically connected to the second isolating switch, a first end of the second isolating switch is electrically connected to a power conversion system, and a second end of the second isolating switch is electrically connected to the second short-circuit protection units of the plurality of high-voltage boxes.

6. The energy storage container according to claim 3, wherein the combiner unit comprises at least two combiner cabinets arranged in parallel; the plurality of high-voltage boxes are electrically connected to one combiner cabinet of the at least two combiner cabinets, the one combiner cabinet is provided with a second current detection unit, and the second current detection unit is configured to detect whether a short circuit occurs in the one combiner cabinet.

7. The energy storage container according to claim 6, wherein, when a short circuit occurs in one of the at least two combiner cabinets, the processing unit is configured to calculate a sum of short-circuit withstand currents of n battery clusters, and to select, based on the sum of the short-circuit withstand currents of the n battery clusters, a fuse adapted to the energy storage container from the first short-circuit protection unit.

8. The energy storage container according to claim 6, wherein, when a short circuit occurs in at least one of the plurality of battery clusters, the processing unit is configured to calculate a sum of short-circuit withstand currents of (2n - x) battery clusters, and to select, based on the sum of the short-circuit withstand currents of the (2n - x) battery clusters, a fuse adapted to the energy storage container from the first short-circuit protection unit, where x denotes the number of short-circuited ones of the plurality of battery clusters.

9. The energy storage container according to any one of claims 1 to 8, wherein each of the plurality of battery clusters comprises a plurality of cells, and, before selecting, based on the short-circuit withstand current, the fuse adapted to the energy storage container from the first short-circuit protection unit, the processing unit is further configured to: obtain a correction coefficient for a short-circuit withstand current of the plurality of cells; and determine the short-circuit withstand current based on the correction coefficient and a nominal withstand current of the plurality of cells.

10. The energy storage container of claim 9, wherein the short-circuit withstand current is equal to the nominal withstand current divided by the correction coefficient.

11. An energy storage container, comprising:
a combiner unit;
a plurality of high-voltage boxes connected in parallel to the combiner unit;
a plurality of battery clusters, each of the plurality of battery clusters being electrically connected to one of the plurality of high-voltage boxes; and
a processing unit electrically connected to the plurality of high-voltage boxes;
wherein the plurality of high-voltage boxes comprise a plurality of first short-circuit protection units and a plurality of first current detection units electrically connected to the plurality of first short-circuit protection units, the first short-circuit protection unit is electrically connected to the processing unit, the first current detection unit is configured to detect a short-circuit withstand current of a branch where one of the plurality of high-voltage boxes is located when a short circuit occurs in the container, and the processing unit is configured to select, based on the short-circuit withstand current, a fuse adapted to the energy storage container from the first short-circuit protection unit; and
wherein the energy storage container is configured as a distributed energy storage container or a centralized energy storage container.

12. The energy storage container according to claim 11, wherein the plurality of high-voltage boxes and the plurality of battery clusters are each provided in a number of n, where n is a positive integer; the first short-circuit protection unit of each of the plurality of high-voltage boxes comprises at least two different types of fuses having different maximum short-circuit withstand currents; the processing unit is configured to select, based on the short-circuit withstand current, a target one of the fuses adapted to the energy storage container from the first short-circuit protection unit.

13. The energy storage container according to claim 11, wherein the plurality of high-voltage boxes further comprise a plurality of second short-circuit protection units, the second short-circuit protection unit is electrically connected to one of the plurality of battery clusters corresponding to one of the plurality of high-voltage boxes and to the combiner unit, and the second short-circuit protection unit is connected in parallel with the first short-circuit protection unit.

14. The energy storage container according to claim 11, wherein the combiner unit comprises a combiner cabinet, the combiner cabinet comprises a first isolating switch, and a plurality of the first short-circuit protection units are electrically connected to the first isolating switch; when a short circuit occurs in at least one of the plurality of battery clusters, the processing unit is configured to calculate a sum of short-circuit withstand currents of (n - x) battery clusters, and to select, based on the sum of the short-circuit withstand currents of the (n - x) battery clusters, a fuse adapted to the energy storage container from the first short-circuit protection unit, where x denotes the number of short-circuited ones of the plurality of battery clusters.

15. The energy storage container according to claim 13, wherein the combiner cabinet comprises a second isolating switch, a plurality of the second short-circuit protection units are electrically connected to the second isolating switch, a first end of the second isolating switch is electrically connected to a power conversion system, and a second end of the second isolating switch is electrically connected to the second short-circuit protection units of the plurality of high-voltage boxes.

16. The energy storage container according to claim 13, wherein the combiner unit comprises at least two combiner cabinets arranged in parallel; the plurality of high-voltage boxes are electrically connected to one combiner cabinet of the at least two combiner cabinets, the one combiner cabinet is provided with a second current detection unit, and the second current detection unit is configured to detect whether a short circuit occurs in the one combiner cabinet.

17. The energy storage container according to claim 16, wherein, when a short circuit occurs in one of the at least two combiner cabinets, the processing unit is configured to calculate a sum of short-circuit withstand currents of n battery clusters, and to select, based on the sum of the short-circuit withstand currents of the n battery clusters, a fuse adapted to the energy storage container from the first short-circuit protection unit.

18. The energy storage container according to claim 16, wherein, when a short circuit occurs in at least one of the plurality of battery clusters, the processing unit is configured to calculate a sum of short-circuit withstand currents of (2n - x) battery clusters, and to select, based on the sum of the short-circuit withstand currents of the (2n - x) battery clusters, a fuse adapted to the energy storage container from the first short-circuit protection unit, where x denotes the number of short-circuited ones of the plurality of battery clusters.

19. The energy storage container according to any one of claims 11 to 18, wherein each of the plurality of battery clusters comprises a plurality of cells, and, before selecting, based on the short-circuit withstand current, the fuse adapted to the energy storage container from the first short-circuit protection unit, the processing unit is further configured to: obtain a correction coefficient for a short-circuit withstand current of the plurality of cells; and determine the short-circuit withstand current based on the correction coefficient and a nominal withstand current of the plurality of cells.

20. A fuse adaptation method, the fuse adaptation method being applied to the energy storage container according to any one of claims 1 to 19, the fuse adaptation method comprising the following steps:
obtaining a short-circuit withstand current of a cell;
calculating, based on the short-circuit withstand current and a short-circuit position inside the energy storage container, a maximum short-circuit withstand current of the energy storage container; and
selecting, based on the maximum short-circuit withstand current of the energy storage container, a fuse adapted to the energy storage container from the first short-circuit protection unit of one of the plurality of high-voltage boxes.
